# EUROPÄISCHE PATENTSCHRIFT

(11) **EP 0 524 218 B1**
(45) Veröffentlichungstag und Bekanntmachung des Hinweises auf die Patenterteilung: **26.10.1994**
(21) Anmeldenummer: 91907233.0
(22) Anmeldetag: 11.04.1991
(51) Int. Cl.: G01B 7/06

(54) **DICKENMESSEINRICHTUNG**
THICKNESS GAUGE
JAUGE D'EPAISSEUR

(30) Priorität: 11.04.1990 DE 4011646
(43) Veröffentlichungstag der Anmeldung: 27.01.1993
(73) Patentinhaber: Micro-Epsilon Messtechnik GmbH & Co. Kommanditgesellschaft, D-94496 Ortenburg (DE)
(72) Erfinder: WISSPEINTNER, Karl, D-8359 Ortenburg (DE); SEIKOWSKY, Axel, D-8340 Pfarrkirchen (DE)
(74) Vertreter: Naumann, Ulrich, Dr.-Ing.
(86) Internationale Anmeldenummer: DE9100301
(87) Internationale Veröffentlichungsnummer: WO9115730

(56) Entgegenhaltungen:
- WO-A-84/02772
- DE-A- 2 829 264
- DE-A- 3 435 908
- US-A- 2 665 333
- US-A- 4 450 404
- US-A- 4 528 507

## Beschreibung

Die vorliegende Erfindung betrifft eine Dickenmeßeinrichtung nach dem Oberbegriff des Patentanspruches 1.

Eine Dickenmeßeinrichtung der in Rede stehenden Art ist aus der US-A 4 450 404 bekannt. Die dort offenbarte Dickenmeßeinrichtung weist einen oberhalb der Materialbahn berührungslos in Schwebe gehaltenen Meßkopf auf, der mit einem "target" und mit einer Luftaustrittsöffnung versehen ist, durch die Druckluft gegen die Oberfläche der Materialbahn austritt. Der Meßkopf wird über eine Stange in einer Positioniervorrichtung orthogonal zur Materialbahn geführt gehalten, indem Druckluft durch einen Raum in der Positioniervorrichtung, durch die Stange und durch die Luftaustrittöffnungen gegen die Materialbahn geleitet wird. Dabei wird sowohl eine Kraft auf eine stempelförmig ausgebildete Stange in Richtung der Materialbahn ausgeübt, als auch eine Kraft in entgegengesetzter Richtung auf den Meßkopf beim Austritt der Luft aus den Luftaustrittsöffnungen. Diese entgegengesetzt gerichteten Kräfte gleichen sich unabhängig von der Stärke des Luftdrucks derart aus, daß der Meßkopf immer in einem vorbestimmten Abstand von der Materialbahn gelagert ist. Außerdem wird in der US-A 4 450 404 vorgeschlagen, auch den unterhalb der Materialbahn angeordneten Sensor berührungslos, in Schwebe gehalten mit einer oben beschriebenen Positioniervorrichtung zu lagern.

Aus der US-A 4 528 407 ist ebenfalls eine Dickenmeßeinrichtung mit relativ zu der Materialbahn in Schwebe gehaltenen, berührungslos arbeitenden Wegmeßsensoren bekannt, die über ein Druckluftpolster in vorgebbarem Abstand zur Materialbahn gehalten werden. Die hier beschriebenen Positioniervorrichtungen erlauben lediglich eine Bewegung der Wegmeßsensoren orthogonal zur Materialbahn.

Die DE-A 28 29 264 zeigt eine Vorrichtung mit einem auf einer Seite des bahnförmigen Materials angeordneten Sender in Form eines Körpers aus einem magnetisierbaren Werkstoff von praktisch zylindrischer Formgebung, der eine aus mehreren Windungen bestehende elektrische Drahtwicklung trägt. Dieser Sender wird in einem konstanten Abstand von dem bahnenförmigen Material gehalten, so daß die Zylinderachse praktisch senkrecht zu dem Material ausgerichtet ist. Auf der anderen Seite des bahnförmigen Materials befindet sich ein Empfänger, der ebenfalls aus einem Körper aus einem magnetisierbaren Werkstoff von praktisch zylindrischer Formgebung besteht, welcher eine aus mehreren Windungen bestehende elektrische Drahtwicklung trägt. Die Achse des zylindrischen Empfängerkörpers ist in Ausrichtung mit der Achse des Senderkörpers angeordnet bzw. gehalten. Auch hier sind der Sender und der Empfänger jeweils nur orthogonal zu der Materialbahn, nämlich in ihrem Abstand zu dieser Materialbahn veränderbar, positionierbar. Die Achse des zylindrischen Empfängerkörpers ist in Ausrichtung mit der Achse des Senderkörpers angeordnet und gehalten.

Schließlich ist aus der WO-A-84 02 772 eine Dickenmeßvorrichtung mit zwei leichten Meßköpfen bekannt, die berührungslos geführt, einander gegenüber angeordnet sind, so daß die Materialbahn zwischen ihnen hindurchgeführt wird. Diese Druckschrift betrifft insbesondere eine spezielle Ausgestaltung der Luftaustrittsdüsen und deren Anordnung bezüglich der Oberflächen der Materialbahn. Die Aufhängung bzw. Halterung der Positioniervorrichtung der Meßköpfe ist hier nicht offenbart.

Die aus dem Stand der Technik bekannten Dickenmeßeinrichtungen sind jedoch in der Praxis problematisch, wenn auf der zu messenden Materialbahn plötzlich Hindernisse auftreten. Dies führt häufig zu Beschädigungen der am Meßkopf angeordneten Sensoren.

Der Lehre der vorliegenden Erfindung liegt daher die Aufgabe zugrunde, eine Dickenmeßeinrichtung der in Rede stehenden Art anzugeben, mit der die Dicke eines elektrisch nicht leitenden Materials verschleißfrei, äußerst genau und ohne die Gefahr einer Beschädigung der Sensorik meßbar ist.

Die erfindungsgemäße Dickenmeßeinrichtung, bei der die voranstehende Aufgabe gelöst ist, ist durch die Merkmale des Patentanspruches 1 beschrieben. Danach ist die eingangs genannte Dickenmeßeinrichtung derart ausgestaltet, daß mindestens eine der Positioniervorrichtungen kardanisch aufgehängt und über lösbare Eingriffsmittel in ihrer Winkelposition festlegbar ist, wobei die Lösbarkeit der Eingriffsmittel eine Beschädigung des Sensors bzw. der Sensoren durch bspw. auf der Materialschiene auftretende Hindernisse wirksam vermeidet.

Bei entsprechend großen Hindernissen verursacht das Ausweichen der Positioniervorrichtung, daß sich die Eingriffsmittel, über die die Positioniervorrichtung in ihrer Winkelposition festgelegt ist, lösen.

Die Positioniervorrichtung könnte dabei so ausgeführt sein, daß sie zur nachgiebigen Positionierung der Metallplatte bzw. des zweiten Wegmeßsensors mindestens eine in Richtung der Materialbahn durch das Eigengewicht der Metallplatte bzw. des zweiten Wegmeßsensors vorgespannte Feder aufweist. Ebenso könnte die Positioniervorrichtung zwei mit jeweils gleichen Polen zueinander gerichtete, zwischen einem unteren Ende der Positioniervorrichtung und der Metallplatte bzw. des zweiten Wegmeßsensors angeordnete Permanentmagnete aufweisen. Desweiteren wäre es auch möglich, daß die Positioniervorrichtung zur nachgiebigen Positionierung der Metallplatte bzw. des zweiten Wegmeßsensors zumindest einen Elektromagneten mit einem im Spulenbereich beweglichen, mit der Metallplatte bzw. dem zweiten Wegmeßsensor starr verbundenen Eisenkern aufweist. Die Vorspannung bzw. die Position der Metallplatte bzw. des zweiten Wegmeßsensors wäre dann durch die elektrische Beaufschlagung des Elektromagneten, d.h. durch Krafteinwirkung auf den Magnetkern, beeinflußbar. Schließlich könnte die Positioniervorrichtung zwei mit jeweils gleichen Polen zueinander gerichtete, ebenfalls zwischen einem unteren Ende der Positioniervorrichtung und der Metallplatte bzw. dem zweiten Wegmeßsensor angeordnete Elektromagnete aufweisen. Die Vorspannung bzw. die Position der Metallplatte bzw. des zweiten Wegmeßsensors wäre dann durch die elektrische Beaufschlagung der Elektromagnete beeinflußbar.

Nachfolgend wird auf vorteilhafte Ausgestaltungen der Positioniervorrichtung Bezug genommen. Insbesondere hinsichtlich einer schnellen Ansprechbarkeit der in Rede stehenden Dickenmeßeinrichtung ist es besonders vorteilhaft, wenn die Positioniervorrichtung eine den Wegmeßsensor bzw. die Metallplatte tragende, mit einem Führungselement durch eine vorzugsweise zylindrische Führungskammer hindurchragende Stange aufweist. Diese Stange muß dann sowohl beim Eintritt in die Führungskammer als auch beim Austritt aus der Führungskammer zu deren Wandung hinreichendes Spiel aufweisen. Das Führungselement wäre dann entsprechend innerhalb der Führungskammer mit Spiel angeordnet.

Zur Erzeugung des Luftstromes innerhalb der Führungskammer weist die Stange in vorteilhafter Weise einen inneren Luftkanal mit einem Luftaustritt auf, der im Bereich innerhalb der Führungskammer liegt. Von diesem Luftaustritt aus strömt die vorzugsweise aus dem zur Luftaustrittsdüse führenden Luftströmungspfad abgezweigte Luft durch die Führungskammer insbesondere zwischen der Innenwandung der Führungskammer und der Außenfläche des Führungselements, so daß diese sich nicht bzw. allenfalls nur kurzfristig berühren. Die aus dem Luftaustritt der Stange strömende Luft gelangt aufgrund des Spiels zwischen Stange und Führungskammer jeweils beim Eintritt und Austritt der Stange in die Führungskammer bzw. aus der Führungskammer nach außerhalb der Führungskammer, so daß diese Strömung ein innerhalb der Führungskammer ständig vorhandenes Luftkissen zwischen den relativ zueinander bewegbaren Teilen aufbaut.

Im Hinblick auf die Vermeidung jeglicher Reibung ist es besonders vorteilhaft, wenn das Führungselement als Kugel ausgeführt ist, durch die sich mittig die Stange hindurcherstreckt. Ein solches Führungselement würde - ohne Luftkissen - ohnehin lediglich einen Linienkontakt zu der Wandung der Führungskammer bilden. Bei Vorhandensein eines Luftstroms - unter Zugrundelegung eines hinreichenden Spiels zwischen dem Führungselement und der Innenwandung der Führungskammer - "schwebt" das als Kugel ausgeführte Führungselement innerhalb der Führungskammer, so daß der sonst auftretende Reibungswiderstand nahezu ausgeschaltet ist.

Hinsichtlich einer stabilen bzw. konstanten Beabstandung zwischen Wegmeßsensor bzw. Metallplatte und Materialbahn ist es besonders vorteilhaft, die Führungskammer und das darin mit Spiel angeordnete Führungselement derart zu dimensionieren, daß der sich zwischen Wegmeßsensor oder Metallplatte und der zu messenden Materialbahn einstellende Abstand - ungeachtet des Luftdrucks und somit ungeachtet der auf das als Kolben wirkende Führungselement und die Materialbahn durch den Luftstrom ausgeübten Kraft - weitgehend konstant ist. Mit dieser Maßnahme wird erreicht, daß ein "Flattern" bzw. Oszillieren des Wegmeßsensors oder der Metallplatte bei Druckschwankungen in der Druckluftleitung weitgehend vermieden sind.

Die Positioniervorrichtung ist kardanisch aufgehängt und über lösbare Eingriffsmittel in ihrer Winkelposition - lösbar - festgelegt. Die Eingriffsmittel bestehen aus einem vorzugsweise horizontal und vertikal nachgiebigen Zentrierteil und einem der Positioniervorrichtung zugeordneten, mit dem Zentrierteil in Eingriff bringbaren Aufnahmeteil. Gemäß einer besonders vorteilhaften Ausgestaltung der erfindungsgemäßen Dickenmeßeinrichtung ist das Zentrierteil als Zentrierstift mit einer der Positioniervorrichtung zugewandten Kugel ausgeführt. Entsprechend ist das Aufnahmeteil an der Positioniervorrichtung als Kugelkalotte oder dgl. ausgeführt. Mit anderen Worten läßt sich die Kugel des Zentrierstifts zumindest teilweise in das Aufnahmeteil einführen, wodurch die Positioniervorrichtung insgesamt in ihrer Längsachse winkelmäßig festgelegt ist. Durch die nachgiebige Ausgestaltung des Zentrierteils sowohl horizontal als auch vertikal sowie durch die kardanische Aufhängung der Positioniervorrichtung kann die Positioniervorrichtung einem auf der Materialbahn auftretenden Hindernis ausweichen, wobei der Eingriff zwischen Zentrierteil und Aufnahmeteil unterbrochen wird.

Hinsichtlich der vertikalen Nachgiebigkeit des Zentrierstifts ist es von besonderem Vorteil, wenn dieser als Kolben eines Luftzylinders sowohl in Richtung der Positioniervorrichtung als auch in entgegengesetzter Richtung druckbeaufschlagbar ist. Somit läßt sich über den im Luftzylinder herrschenden Luftdruck einstellen, ab welcher am Sensor angreifenden Kraft die Positioniervorrichtung bzw. das Aufnahmeteil der Positioniervorrichtung außer Eingriff mit dem Zentrierteil verbringbar ist.

Damit nun eine Beschädigung des Wegmeßsensors auch bei größeren Hindernissen weitgehend vermieden ist, sind die Eingriffsmittel in besonders vorteilhafter Weise als elektrische Leiter ausgeführt, so daß sie im Eingriff insgesamt einen elektrischen Leiter bzw. einen Strompfad bilden. Bei unterbrochenem Strompfad wird dann die Positioniervorrichtung bzw. der Wegmeßsensor oder die Metallplatte von der hinsichtlich ihrer Dicke zu messenden Materialbahn wegbewegt, so daß eine Beschädigung durch ein Hindernis nicht eintreten kann.

Hinsichtlich der Ausgestaltung der dem Wegmeßsensor zugeordneten Luftaustrittsdüse ist es von Vorteil, diese Luftaustrittsdüse kreisringförmig um den Wegmeßsensor herum auszubilden. Dadurch wird der Wegmeßsensor im Betrieb der Dickenmeßeinrichtung gleichmäßig von Luft umflutet, wodurch sich zwischen dem Wegmeßsensor und der Materialbahn das Luftkissen gleichmäßig ausbildet.

Hinsichtlich der Anordnung der der Metallplatte zugeordneten Luftaustrittsdüse empfielt es sich, diese in der Metallplatte selbst, vorzugsweise mittig, auszubilden. Durch diese integrierte Ausbildung der Luftaustrittsdüse ist gewährleistet, daß sich das Luftkissen gleichmäßig zwischen der Metallplatte und dem Materialband aufbaut.

Die der Metallplatte zugeordnete Luftaustrittsdüse könnte in vorteilhafter Weise - wie die dem Wegmeßsensor zugeordnete Luftaustrittsdüse - kreisringförmig ausgebildet sein und dabei in etwa diegleichen Maße wie die dem Wegmeßsensor zugeordnete Luftaustrittsdüse aufweisen. Beispielsweise könnte die dem Wegmeßsensor zugeordnete Luftaustrittsdüse - kreisringförmig um den Wegmeßsensor herum ausgebildet - in einem plattenförmig ausgeführten Luftkissenkopf vorgesehen sein, der in etwa die gleiche Fläche wie die Metallplatte aufweist. Der Luftkissenkopf des Wegmeßsensors und die Metallplatte wären dann nahezu identisch ausgeführt, wobei der Wegmeßsensor etwa mittig im Luftkissenkopf des Wegmeßsensors angeordnet wäre.

Ebenso könnten der Metallplatte mehrere Luftaustrittsdüsen zugeordnet sein. Diese Merhrzahl von Luftaustrittsdüsen könnten dann innerhalb der Metallplatte, vorzugsweise gleichmäßig verteilt, ausgebildet sein. Voranstehend beschriebene Ausgestaltungen könnten dabei entsprechend realisiert werden.

Nun spielt das Material bei der Auslegung des Meßprinzips, nach dem der Wegmeßsensor arbeitet, eine wesentliche Rolle. Auf jeden Fall handelt es sich bei der in Rede stehenden Platte um eine metallische Platte. Diese Metallplatte kann beispielsweise aus ferromagnetischem Material hergestellt sein. Dann könnte der Wegmeßsensor beispielsweise nach dem Wirbelstromprinzip arbeiten. Bei einer ferromagnetischen Metallplatte könnte der Wegmeßsensor jedoch auch induktiv oder kapazitiv arbeiten.

Die Metallplatte kann jedoch ebenso aus nicht-ferromagnetischem Material hergestellt sein. Dann müßte der Wegmeßsensor entweder nach dem Wirbelstromprinzip oder kapazitiv arbeiten.

Nach einer weiter vorteilhaften Ausgestaltung der erfindungsgemäßen -Lehre erfolgt durch Veränderung der Luftdrücke zwischen den Luftaustrittsdüsen und der Materialbahn die Kalibrierung der Dickenmeßeinrichtung. Durch Änderung der Luftdrücke wird das zwischen dem Wegmeßsensor bzw. der Metallplatte oder dem zweiten Wegmeßsensor und der Materialbahn sich aufbauende Luftkissen und somit der Abstand zwischen dem Wegmeßsensor bzw. der Metallplatte oder dem zweiten Wegmeßsensor und der Materialbahn verändert. Durch Änderung des Abstandes zwischen Wegmeßsensor und der Materialbahn bzw. durch Änderung des Abstandes zwischen dem Wegmeßsensor und der Metallplatte bzw. dem zweiten Wegmeßsensor wird der zur Dickenmessung zulässige Abstandsbereich zwischen Wegmeßsensor und Metallplatte bzw. zweitem Wegmeßsensor "durchfahren". Jedem Abstand - bei gleichbleibender vorgegebener Dicke des Bandmaterials oder eines polymeren Referenzbandes - ist dann ein auf die vorgegebene Dicke bezogener Meßfehler zuordenbar, durch den die einzelnen Meßwerte korrigiert werden können. Diese Kalibrierung der Dickenmeßeinrichtung erfolgt wahlweise automatisch.

Es gibt nun verschiedene weitere Möglichkeiten, den Gegenstand der vorliegenden Erfindung in vorteilhafter Weise auszugestalten und weiterzubilden. Dazu ist einerseits auf die nachgeordneten Patentansprüche, andererseits auf die Erläuterung von Ausführungsbeispielen der erfindungsgemäßen Lehre anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen der Lehre erläutert. In der Zeichnung zeigt
- Fig. 1: in einer schematischen Darstellung ein Ausführungsbeispiel einer erfindungsgemäßen Dickenmeßeinrichtung, wobei sich die Dickenmeßeinrichtung in Ruhestellung befindet,
- Fig. 2: in einer schematischen Darstellung die Dickenmeßeinrichtung aus Fig. 1 in Arbeitsstellung,
- Fig. 3: in einer schematischen Darstellung ein Ausführungsbeispiel einer Positioniervorrichtung des Gegenstandes aus den Fig. 1 und 2 und
- Fig. 4: in einer perspektivischen Darstellung ein weiteres Ausführungsbeispiel einer kardanisch aufgehängten Positioniervorrichtung einer erfindungsgemäßen Dickenmeßeinrichtung.

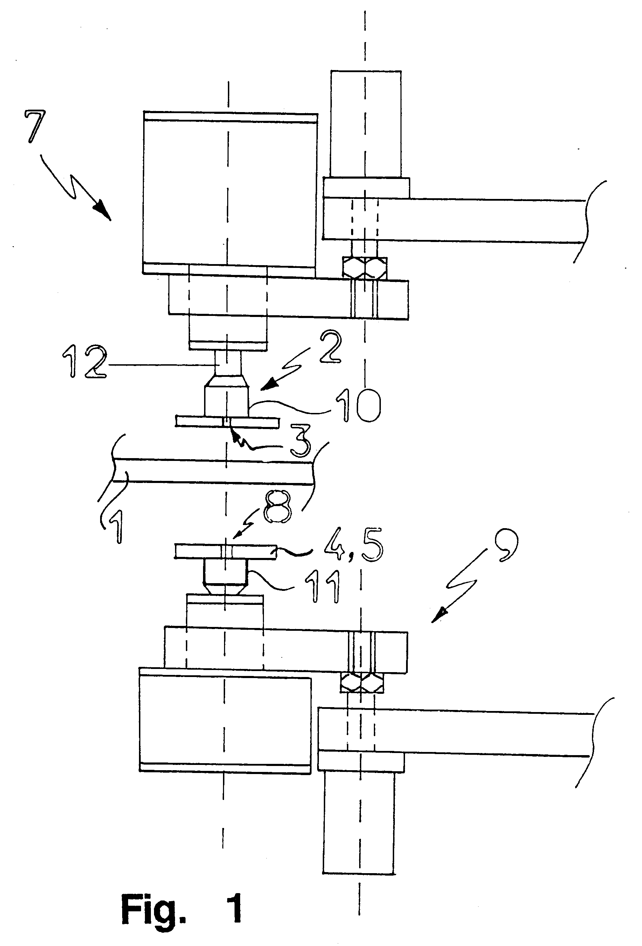

Die nachfolgende Figurenbeschreibung bezieht sich auf zwei Ausführungsbeispiele der vorliegenden Erfindung. Fig. 1 zeigt dabei eine Dickenmeßeinrichtung in Ruhestellung. Diese beispielhaft dargestellte Dickenmeßeinrichtung dient zum berührungslosen und kontinuierlichen Messen der Dicke d polymerer Materialbahnen 1. Die Dickenmeßeinrichtung weist einen relativ zu der Materialbahn 1 in Schwebe gehaltenen, berührungslos arbeitenden Wegmeßsensor 2 auf. Dem Wegmeßsensor 2 ist eine Luftaustrittsdüse 3 zugeordnet. Durch die Luftaustrittsdüse 3 ist ein Luftstrom von einer Seite her derart auf die Materialbahn 1 leitbar, so daß sich zwischen der Materialbahn 1 und dem so in Schwebe gehaltenen Wegmeßsensor 2 ein über den Luftdruck vorgebbarer Abstand einstellt. Desweiteren ist auf der anderen Seite der Materialbahn 1 eine Metallplatte 4 angeordnet. Der Wegmeßsensor 2 mißt gegen diese Metallplatte 4.

Ebenso könnte jedoch auf der anderen Seite der Materialbahn 1 anstelle der Metallplatte 4 ein in den Fig. angedeuteter zweiter Wegmeßsensor 5 angeordnet sein, wobei dann die Wegmeßsensoren 2, 5 gegeneinander messen.

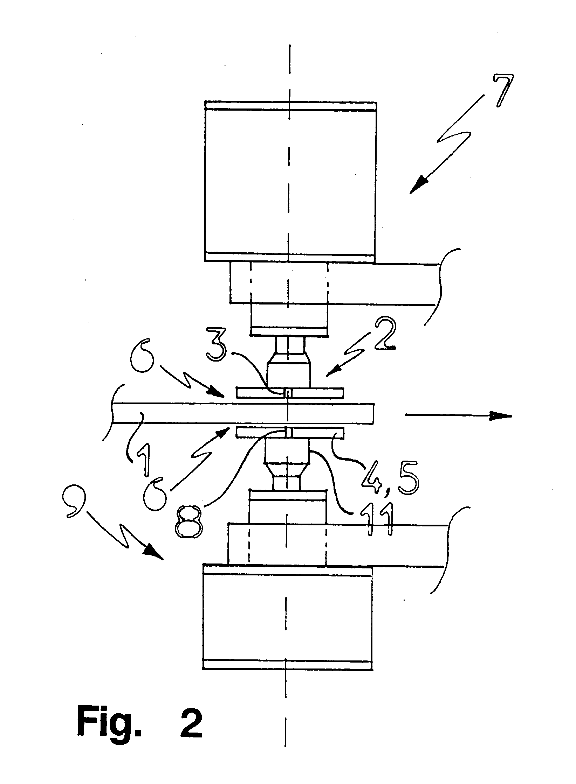

Fig. 2 zeigt das in Rede stehende Ausführungsbeispiel der erfindungsgemäßen Dickenmeßeinrichtung in Arbeitsstellung. Das sich zwischen dem Wegmeßsensor 2 bzw. der Metallplatte 4 oder dem Wegmeßsensor 5 und der Materialbahn 1 ausbildende Luftkissen 6 ist durch einen geringen Abstand zwischen dem Wegmeßsensor 2 bzw. der Metallplatte 4 oder dem zweiten Wegmeßsensor 5 und der Materialbahn angedeutet.

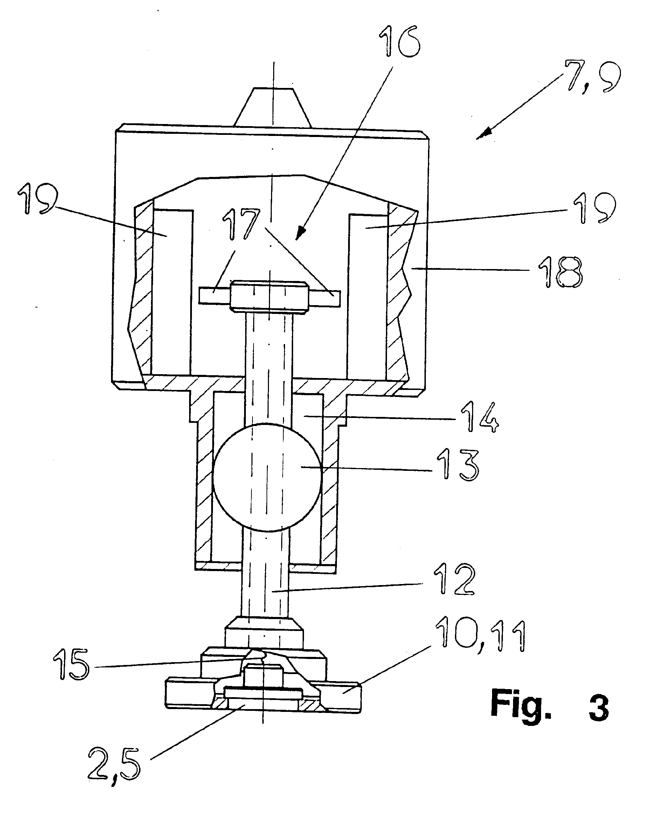

Die Fig. 1 und 2 zeigen gemeinsam, daß bei der hier dargestellten Dickenmeßeinrichtung der Wegmeßsensor 2 von oberhalb der Materialbahn 1 und die Metallplatte 4 bzw. der zweite Wegmeßsensor 5 von unterhalb der Materialbahn 1 relativ zu der Materialbahn 1 in Schwebe gehalten wird. Dabei wird der Wegmeßsensor 2 von einer zumindest orthogonal zur Materialbahn 1 nachgiebigen Positioniervorrichtung 7 gehalten. Die Positioniervorrichtung 7 ist teleskopartig ausgeführt, was in der Darstellung gemäß Fig. 3 schematisch angedeutet ist.

Ähnlich wie bei dem Wegmeßsensor 2 ist an der Metallplatte 4 bzw. an dem zweiten Wegmeßsensor 5 mindestens eine Luftaustrittsdüse 8 vorgesehen. Durch die Luftaustrittsdüse 8 ist ein Luftstrom derart auf die Materialbahn 1 leitbar, daß sich zwischen der Materialbahn 1 und der in Schwebe gehaltenen Metallplatte 4 bzw. dem in Schwebe gehaltenen zweiten Wegmeßsensor 5 ein über den Luftdruck vorgebbarer Abstand einstellt.

Ebenfalls in ähnlicher Weise wie bei dem Wegmeßsensor 2 wird die von unterhalb der Materialbahn 1 relativ zu dieser in Schwebe gehaltene Metallplatte 4 bzw. der zweite Wegmeßsensor 5 über eine zumindest orthogonal zu der Materialbahn 1 nachgiebige Positioniervorrichtung 9 gehalten. Der durch die aus der Luftaustrittsdüse 8 strömende Luft verursachte, zwischen der Materialbahn 1 und der Metallplatte 4 bzw. dem zweiten Wegmeßsensor 5 herrschende Luftdruck wirkt der von der Positioniervorrichtung 9 aufgebrachten, in Richtung der Metallplatte 4 bzw. des zweiten Wegmeßsensors 5 wirkenden Kraft derart entgegen, daß sich der Abstand zwischen der Metallplatte 4 bzw. dem zweiten Wegmeßsensor 5 und der Materialbahn 1 durch ein entsprechendes Kräftegleichgewicht einstellt.

Die in Fig. 3 lediglich beispielhaft gezeigte teleskopartige Ausgestaltung der oberen Positioniervorrichtung 7 des Wegmeßsensors 2 findet sich bei den hier bevorzugten Ausführungsbeispielen auch bei der unteren Positioniervorrichtung 9 der Metallplatte 4 bzw. des zweiten Wegmeßsensor 5 wieder.

Sowohl das die Luftaustrittsdüse 3 des Wegmeßsensors 2 aufweisende Teil als auch die die Luftaustrittsdüse 8 aufweisende Metallplatte 4 bzw. der entsprechende Wegmeßsensor 5 ist gemäß der Darstellung in den Fig. 1 und 2 als Luftkissenkopf 10, 11 ausgeführt. Die Luftkissenköpfe 10, 11 sind dabei vorzugsweise mit im wesentlichen runden, einander gegenüberliegenden Flächen ausgebildet, die im Betrieb der Dickenmeßeinrichtung beidseitig schwebend auf die Materialbahn 1 aufsetzen.

Fig. 3 zeigt nun besonders deutlich, daß die Positioniervorrichtung 7 oder 9 ein den Wegmeßsensor 2 oder 5 bzw. die Metallplatte 4 tragende Stange 12 aufweist. Diese Stange 12 erstreckt sich mit einem Führungselement 13 durch eine zylindrische Führungskammer 14. Fig. 3 ist so zu verstehen, daß die Stange 12 sowohl beim Eintritt in die Führungskammer 14 als auch beim Austritt aus der Führungskammer 14 zu deren Wandung Spiel aufweist. Des weiteren ist das Führungselement 13 innerhalb der Führungskammer 14 mit Spiel angeordnet, so daß bei einem durch die Führungskammer 14 hindurchgeleiteten Luftstrom das Führungselement 13 und die Führungskammer 14 eine schwebende bzw. reibungsfreie Führung der Stange 12 bilden. Zur Erzeugung des Luftstroms innerhalb der Führungskammer 14 weist die Stange 12 einen in Fig. 3 nicht gezeigten inneren Luftkanal mit einem Luftaustritt im Bereich innerhalb der Führungskammer 14 auf. Das Führungselement 13 ist bei dem in Fig. 3 gewählten Ausführungsbeispiel als Kugel ausgeführt, durch die sich mittig die Stange 12 hindurcherstreckt.

In Fig. 3 ist angedeutet, daß sich durch die Stange 12 hindurch Anschlußleitungen 15 des Wegmeßsensors 2 oder 5 erstrecken. Damit nun diese Anschlußleitungen 15 nicht abgedreht werden können, weist die Stange 12 eine Drehsicherung 16 zur Verhinderung von Drehungen der Stange 12 um mehr als 360° auf. Dazu sind der Stange 12 im Bereich ihres Umfangs mit der Stange 12 drehende Magnete 17 zugeordnet. Dem Gehäuse 18 der Positioniervorrichtung 7 bzw. 9 sind entsprechend gleichsinnig oder gegensinnig gepolte ortsfeste Magnete 19 zugeordnet, so daß die Winkelposition der Stange 12 über abstoßende oder anziehende Kräfte der Magnete 17, 19 vorgegeben ist. Des weiteren kann am Gehäuse 18 der Positioniervorrichtung 7 bzw. 9 ein in den Figuren nicht gezeigter Anschlag für einen an der Stange 12 angeordneten, in den Figuren ebenfalls nicht gezeigten Anschlagkörper ausgebildet sein.

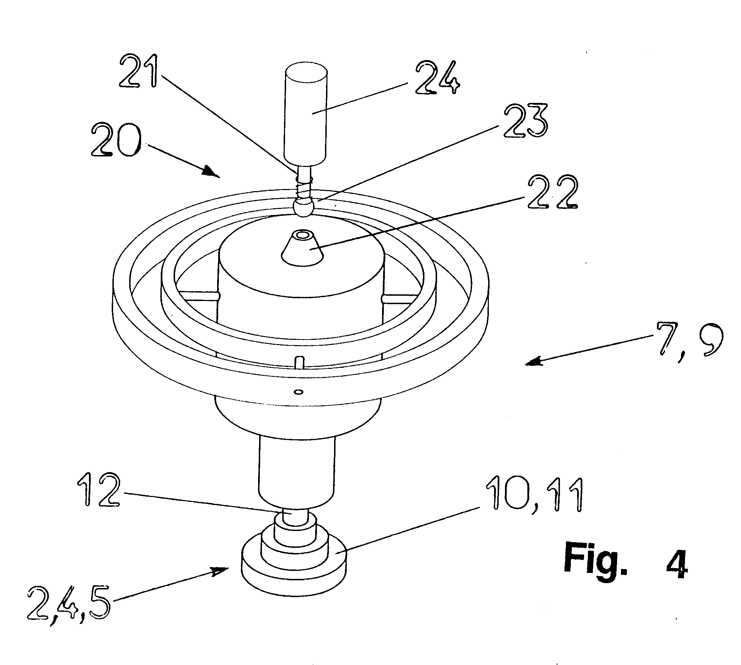

Fig. 4 zeigt deutlich, daß die Positioniervorrichtung 7 bzw. 9 der erfindungsgemäßen Dickenmeßeinrichtung kardanisch aufgehängt ist. Des weiteren ist die Positioniervorrichtung 7 bzw. 9 über lösbare Eingriffsmittel 20 in ihrer Winkelposition festlegbar. Die Eingriffsmittel 20 bestehen bei dem in Fig. 4 gewählten Ausführungsbeispiel aus einem horizontal und vertikal nachgiebigen Zentrierteil 21 und einem der Positioniervorrichtung 7 bzw. 9 zugeordneten, mit dem Zentrierteil 21 in Eingriff bringbaren Aufnahmeteil 22. Das Zentrierteil 21 ist als Zentrierstift mit einer der Positioniervorrichtung 7 bzw. 9 zugewandten Kugel 23 und das Aufnahmeteil 22 als Kugelkalotte ausgeführt. Der Zentrierstift bzw. das Zentrierteil 21 ist als Kolben eines Luftzylinders 24 in Richtung der Positioniervorrichtung 7 bzw. 9 und entgegengesetzt druckbeaufschlagbar.

In den bereits zuvor erörterten Fig. 1 und 2 ist des weiteren angedeutet, daß die dem Wegmeßsensor 2 zugeordnete Luftaustrittsdüse 3 kreisringförmig um den Wegmeßsensor 2 herum ausgebildet ist. Desweiteren ist in etwa zu erkennen, daß die der Metallplatte 4 zugeordnete Luftaustrittsdüse 8 in der Metallplatte 4 in etwa mittig ausgebildet ist. Dabei ist die der Metallplatte 4 zugeordnete Luftaustrittsdüse 8 kreisringförmig ausgebildet und hat etwa die gleichen Maße wie die dem Wegmeßsensor 2 zugeordnete Luftaustrittsdüse 3.

## Patentansprüche

1. Dickenmeßeinrichtung zum berührungslosen und kontinuierlichen Messen der Dicke elektrisch nicht leitender Materialien, insbesondere polymerer Materialbahnen (1) wie Folien oder dgl., Papierbahnen oder Keramikschichten, mit einem relativ zu der Materialbahn (1) in Schwebe gehaltenen, berührungslos arbeitenden Wegmeßsensor (2), mit mindestens einer dem Wegmeßsensor (2) zugeordneten Luftaustrittsdüse (3), wobei durch die Luftaustrittsdüse (3) ein Luftstrom von einer Seite her derart auf die Materialbahn (1) leitbar ist, daß sich zwischen der Materialbahn (1) und dem so in Schwebe gehaltenen Wegmeßsensor (2) ein über den Luftdruck vorgebbarer Abstand einstellt, und mit einer auf der anderen Seite der Materialbahn (1) angeordneten Metallplatte (4), wobei der Wegmeßsensor (2) gegen die Metallplatte (4) mißt, und/oder mit einem auf der anderen Seite der Materialbahn (1) angeordneten berührungslos arbeitenden - zweiten - Wegmeßsensor (5), der vorzugsweise von unten, ebenfalls mit vorgebbarem Abstand zu der Materialbahn (1) in Schwebe gehalten ist, wobei die Wegmeßsensoren (2, 5) gegeneinander messen, und mit zumindest orthogonal zur Materialbahn (1) nachgiebigen Positioniervorrichtungen (7 und 9) für den Wegmeßsensor (2) und die Metallplatte (4) bzw. den zweiten Wegmeßsensor (5), **dadurch gekennzeichnet**, daß mindestens eine der Positioniervorrichtungen (7 bzw. 9) kardanisch aufgehängt und über lösbare Eingriffsmittel (20) in ihrer Winkelposition festlegbar ist, wobei die Lösbarkeit der Eingriffsmittel (20) eine Beschädigung des Sensors (2) bzw. der Sensoren (2) durch bspw. auf der Materialschiene (1) auftretende Hindernisse wirksam vermeidet.

2. Dickenmeßeinrichtung nach Anspruch 1, dadurch gekennzeichnet, daß die Positioniervorrichtung (9) der Metallplatte (4) bzw. des zweiten Wegmeßsensors (5) teleskopartig ausgeführt ist und zur nachgiebigen Positionierung der Metallplatte (4) bzw. des zweiten Wegmeßsensors (5) mindestens eine in Richtung der Materialbahn (4) durch das Eigengewicht der Metallplatte (4) bzw. des zweiten Wegmeßsensors (5) vorgespannte Feder aufweist oder zwei mit jeweils gleichen Polen zueinander gerichtete, zwischen einem unteren Ende der Positioniervorrichtung (9) und der Metallplatte (4) bzw. dem zweiten Wegmeßsensor (5) angeordnete Permanentmagnete aufweist oder zumindest einen Elektromagneten mit einem im Spulenbereich beweglichen, mit der Metallplatte (4) bzw. dem zweiten Wegmeßsensor (5) starr verbundenen Eisenkern aufweist und daß die Vorspannung bzw. die Position der Metallplatte (4) bzw. des zweiten Wegmeßsensors (5) durch die elektrische Beaufschlagung des Elektromagneten, d.h. durch Krafteinwirkung auf den Magnetkern, beeinflußbar ist.

3. Dickenmeßeinrichtung nach Anspruch 2, dadurch gekennzeichnet, daß die Positioniervorrichtung (9) zwei mit jeweils gleichen Polen zueinander gerichtete, zwischen einem unteren Ende der Positioniervorrichtung (9) und der Metallplatte (4) bzw. dem zweiten Wegmeßsensor (5) angeordnete Elektromagnete aufweist und daß die Vorspannung bzw. die Position der Metallplatte (4) bzw. des zweiten Wegmeßsensors (5) durch elektrische Beaufschlagung der Elektromagnete beeinflußbar ist.

4. Dickenmeßeinrichtung nach einem der Ansprüche 1 bis 3, dadurch gekennzeichnet, daß die Positioniervorrichtung (7 bzw. 9) eine den Wegmeßsensor (2) bzw. den zweiten Wegmeßsensor (5) oder die Metallplatte (4) tragende, mit einem Führungselement (13) durch eine vorzugsweise zylindrische Führungskammer (14) hindurchragende Stange (12) aufweist, daß die Stange (12) sowohl beim Eintritt in die Führungskammer (14) als auch beim Austritt aus der Führungskammer (14) zu deren Wandung Spiel aufweist, daß das Führungselement (13) innerhalb der Führungskammer (14) mit Spiel angeordnet ist und daß bei einem durch die Führungskammer (14) hindurchgeleiteten Luftstrom, der den gleichen Luftdruck wie der aus der Luftaustrittsdüse (3) zur Materialbahn (1) hin austretende Luftstrom aufweist, das Führungselement (13) und die Führungskammer (14) eine schwebende bzw. reibungsfreie Führung der Stange (12) bilden, wobei zur Erzeugung des Luftstromes innerhalb der Führungskammer (14) die Stange (12) einen inneren Luftkanal mit einem Luftaustritt im Bereich innerhalb der Führungskammer (14) aufweist und das Führungselement (13) vorzugsweise als Kugel (23) ausgeführt ist, durch die sich mittig die Stange (12) hindurcherstreckt und wobei die Führungskammer (14) und das darin mit Spiel angeordnete Führungselement (13) derart dimensioniert sind, daß der sich zwischen Wegmeßsensor (2 bzw. 5) oder Metallplatte (4) und der zu messenden Materialbahn (1) einstellende Abstand ungeachtet des Luftdrucks und somit ungeachtet der auf das als Kolben wirkende Führungselement (13) und die Materialbahn (1) durch den Luftstrom ausgeübten Kraft weitgehend konstant ist.

5. Dickenmeßeinrichtung nach einem der Ansprüche 1 bis 4, wobei sich durch die Stange (12) hindurch Anschlußleitungen (15) des Wegmeßsensors (2) erstrecken, dadurch gekennzeichnet, daß die Stange (12) zur Verhinderung von Drehungen um mehr als 360° eine Drehsicherung (16) aufweist, daß der Stange (12) im Bereich ihres Umfangs mit der Stange (12) drehende Magnete (17) zugeordnet sind und daß dem Gehäuse (18) der Positioniervorrichtung (7 bzw. 9) gleichsinnige oder gegensinnige ortsfeste Magnete (19) zugeordnet sind, so daß die Winkelposition der Stange (12) über abstoßende oder anziehende Kräfte der Magnete (17, 19) vorgegeben ist und daß am Gehäuse (18) der Positioniervorrichtung (7 bzw. 9) ein Anschlag für einen an der Stange (12) angeordneten Anschlagkörper ausgebildet ist.

6. Dickenmeßeinrichtung nach einem der Ansprüche 1 bis 5, dadurch gekennzeichnet, daß die Eingriffsmittel (20) aus einem vorzugsweise horizontal und vertikal nachgiebigen Zentrierteil (21) und einem der Positioniervorrichtung (7 bzw. 9) zugeordneten, mit dem Zentrierteil (21) in Eingriff bringbaren Aufnahmeteil (22) bestehen, daß das Zentrierteil (21) vorzugsweise als Zentrierstift mit einer der Positioniervorrichtungen (7 bzw. 9) zugewandten Kugel (23) und das Aufnahmeteil (22) als Kugelkalotte ausgeführt sind, daß der Zentrierstift als Kolben eines Luftzylinders (24) in Richtung der Positioniervorrichtung (7 bzw. 9) und entgegengesetzt druckbeaufschlagbar ist und daß die Eingriffsmittel (20) im Eingriff vorzugsweise einen elektrischen Leiter bilden und daß bei unterbrochenem Leiter die Positioniervorrichtung (7 bzw. 9) bzw. der Wegmeßsensor (2 bzw. 5) oder die Metallplatte (4) von dem zu messenden Material wegbewegt wird.

7. Dickenmeßeinrichtung nach einem der Ansprüche 1 bis 6, dadurch gekennzeichnet, daß die dem Wegmeßsensor (2 bzw. 5) zugeordnete Luftaustrittsdüse (3) kreisringförmig um den Wegmeßsensor (2) herum oder in der Metallplatte (4) zugeordnete Luftaustrittdüse (8) kreisringförmige ausgebildet ist und in etwa die gleichen Maße wie die dem Wegmeßsensor (2) zugeordnete Luftaustrittsdüse (3) aufweist oder daß der Metallplatte (4) mehrere Luftaustrittsdüsen (8) zugeordnet sind und daß die Luftaustrittsdüsen (8) innerhalb der Metallplatte (4), vorzugsweise gleichmäßig verteilt, ausgebildet sind.

8. Dickenmeßeinrichtung nach einem der Ansprüche 1 bis 7, dadurch gekennzeichnet, daß die Metallplatte (4) aus ferromagnetischem Material hergestellt ist und daß der Wegmeßsensor (2) nach dem Wirbelstromprinzip, induktiv oder kapazitiv arbeitet.

9. Dickenmeßeinrichtung nach einem der Ansprüche 1 bis 7, dadurch gekennzeichnet, daß die Metallplatte (4) aus nicht-ferromagnetischem Material hergestellt ist und daß der Wegmeßsensor (2) nach dem Wirbelstromprinzip oder kapazitiv arbeitet.

10. Dickenmeßeinrichtung nach einem der Ansprüche 1 bis 9, dadurch gekennzeichnet, daß die Kalibrierung der Dickenmeßeinrichtung durch Veränderung der Luftdrücke zwischen den Luftaustrittsdüsen (3, 8) und dem Bandmaterial (1) erfolgt, so daß durch Änderung des Abstandes zwischen Wegmeßsensor (2) bzw. Metallplatte (4) oder zweitem Wegmeßsensor und Materialbahn (1) bzw. durch Änderung des Abstandes zwischen dem Wegmeßsensor (2) und der Metallplatte (4) oder dem zweiten Wegmeßsensor der zur Dickenmessung zulässige Abstandsbereich zwischen Wegmeßsensor (2) und Metallplatte (4) oder zweitem Wegmeßsensor durchfahren wird und jedem Abstand - bei gleichbleibender vorgegebener Dicke der Materialbahn (1) - ein auf die vorgegebene Dicke bezogener Meßfehler zuordenbar ist und daß die Kalibrierung der Dickenmeßeinrichtung wahlweise automatisch erfolgt.

## Claims

1. Thickness gauge for the contactless and continuous measurement of the thickness of electrically non-conductive materials, in particular polymer material webs (1) such as films or the like, paper webs or ceramic layers, having a contactless distance measuring sensor (2) kept hovering relative to the material web (1), having at least one air outlet nozzle (3) associated with the distance measuring sensor (2), wherein a flow of air can be directed through the air outlet nozzle (3) from one side onto the material web (1) in such a way that a spacing, which can be predetermined by the air pressure, is set between the material web (1) and the distance measuring sensor (2) which is kept hovering in this manner, and having a metal plate (4) disposed on the other side of the material web (1), the distance measuring sensor (2) measuring against the metal plate (4), and/or having a second contactless distance measuring sensor (5) which is disposed on the other side of the material web (1) and which is preferably kept hovering from below, likewise at a predeterminable spacing relative to the material web (1), wherein the distance measuring sensors (2, 5) measure against one another, and having positioning devices (7, 9) for the distance measuring sensor (2) and the metal plate (4) or the second measuring sensor (5), which devices (7, 9) are resilient at least at right-angles to the material web (1), characterised in that at least one of the positioning devices (7 or 9) is suspended on gimbals and can be secured in its angular position by detachable engagement means (20), the detachability of the engagement means (20) effectively preventing damage to the sensor (2) or sensors (2) for example by obstacles occurring on the material web (1).

2. Thickness gauge according to Claim 1, characterised in that the positioning device (9) of the metal plate (4) or of the second distance measuring device (5) is telescopic and, for the resilient positioning of the metal plate (4) or of the second distance measuring sensor (5), comprises at least one spring which is pretensioned in the direction of the material web (4) by the weight of the metal plate (4) or of the second distance measuring sensor (5), or comprises two permanent magnets which are disposed with identical poles facing one another in each case and between a lower end of the positioning device (9) and the metal plate (4) or the second distance measuring device (5), or comprises at least one electromagnet with an iron core which is movable in the coil area and is rigidly connected to the metal plate (4) or to the second distance measuring sensor (5); and in that the pretensioning or the position of the metal plate (4) or of the second distance measuring sensor (5) can be influenced by the electrical load of the electromagnet, i.e. by the effect of force on the magnet core.

3. Thickness gauge according to Claim 2, characterized in that the positioning device (9) comprises two electromagnets which are disposed with identical poles facing each other in each case and between a lower end of the positioning device (9) and the metal plate (4) or the second distance measuring sensor (5); and in that the pretensioning or the position of the metal plate (4) or of the second distance measuring sensor (5) can be influenced by electrical load of the electromagnets.

4. Thickness gauge according to any one of Claims 1 to 3, characterised in that the positioning device (7 or 9) comprises a rod (12) which carries the distance measuring sensor (2), or the second distance measuring sensor (5) or the metal plate (4), and has a guide element (13) projecting through a preferably cylindrical guide chamber (14); in that the rod (12) has clearance from the wall of the guide chamber (14) both when it enters the guide chamber (14) and when it emerges therefrom; in that the guide element (13) is disposed with play in the guide chamber (14); and in that, when a flow of air, which has the same air pressure as the flow of air emerging from the air outlet nozzle (3) towards the material web (1), is guided through the guide chamber (14), the guide element (13) and the guide chamber (14) form a hovering or frictionless guide system for the rod (12), the rod (12) comprising an inner air duct with an air outlet in the area within the guide chamber (14) in order to generate the flow of air within the guide chamber (14), and the guide element (13) preferably being in the form of a sphere (23) through which the rod (12) extends centrally, and the guide chamber (14) and the guide element (13) disposed therein with play being dimensioned such that the spacing to be set between the distance measuring sensor (2 or 5) or the metal plate (4) and the material web (1) to be measured is largely constant regardless of the air pressure and thus regardless of the force exerted by the flow of air on the guide element (13) acting as a piston and the material web (1).

5. Thickness gauge according to any one of Claims 1 to 4, connection lines (15) of the distance measuring sensor (2) extending through the rod (2), characterized in that the rod (12) comprises a rotational securing device (16) for preventing rotations through more than 360°; in that magnets (17) rotating in the vicinity of the periphery of the rod (12) are associated with the latter; in that rigid magnets (19) in the same or in a different sense are associated with the housing (18) of the positioning device (7 or 9) such that the angular position of the rod (12) is predetermined by repelling or attracting forces of the magnets (17, 19); and in that a stop for a stop member disposed on the rod (12) is formed on the housing (18) of the positioning device (7 or 9).

6. Thickness gauge according to any one of Claims 1 to 5, characterised in that the engagement means (20) consist of a preferably horizontally and vertically resilient centring part (21) and an accommodating part (22) which is associated with one of the positioning devices (7 or 9) and which can be brought into engagement with the centring part (21); in that the centring part (21) is preferably in the form of a centring pin with a sphere (23) facing one of the positioning devices (7 or 9) and the accommodating part being in the form of a spherical segment; in that the centring pin, as the piston of an air cylinder (24), can be acted upon by pressure in the direction of the positioning device (7 or 9) and in the opposite direction; in that the engagement means (20) in engagement preferably form an electrical conductor; and in that, when the conductor is interrupted, the positioning device (7 or 9) or the distance measuring sensor (2 or 5) or the metal plate (4) is moved away from the material to be measured.

7. Thickness gauge according to any one of Claims 1 to 6, characterised in that the air outlet nozzle (3) associated with the distance measuring sensor (2 or 5) is formed in a circular manner about the distance measuring sensor (2) or is circular in the air outlet nozzle (8) associated with the metal plate (4) and is approximately half the size of the air outlet nozzle (3) associated with the distance measuring sensor (2); or in that a plurality of air outlet nozzles (8) are associated with the metal plate (4); and in that the air outlet nozzles (8) are formed, preferably regularly distributed, within the metal plate (4).

8. Thickness gauge according to any one of Claims 1 to 7, characterised in that the metal plate (4) is produced from ferromagnetic material; and in that the distance measuring sensor (2) operates inductively or capacitively according to the eddy current principle.

9. Thickness gauge according to any one of Claims 1 to 7, characterised in that the metal plate (4) is produced from non-ferromagnetic material; and in that the distance measuring sensor (2) operates inductively or capacitively according to the eddy current principle.

10. Thickness gauge according to any one of Claims 1 to 9, characterised in that the thickness gauge is calibrated by altering the air pressures between the air outlet nozzles (3, 8) and the web material (1) such that, by altering the spacing between the distance measuring sensor (2) or the metal plate (4) or the second distance measuring sensor and the material web (1) or by altering the spacing between the distance measuring sensor (2) and the metal plate (4) or the second distance measuring sensor, the spacing range which is permissible for measuring the thickness between the distance measuring sensor (2) and the metal plate (4) or the second distance measuring sensor is passed through and a measuring error relative to the predetermined thickness can be associated with each spacing - whilst the predetermined thickness of the material web (1) remains the same; and in that the thickness gauge is optionally calibrated automatically.

## Revendications

1. Jauge d'épaisseur pour la mesure sans contact et en continu de l'épaisseur de matériaux non conducteurs électriques, notamment de bandes de matières polymères (1) telles que des feuilles ou similaires, de bandes de papier ou de revêtements en céramique, avec un capteur de mesure de distance (2) fonctionnant sans contact et maintenu en suspension par rapport à la bande de matière (1), avec au moins une tuyère d'échappement d'air (3) associée au capteur de mesure de distance (2), la tuyère d'échappement d'air (3) permettant de projeter un courant d'air d'un côté sur la bande de matière (1) de manière telle qu'entre cette bande de matière (1) et le capteur de mesure de distance (2) ainsi maintenu en suspension est établie une distance qui est fonction de la pression d'air, et avec une plaque métallique (4) disposée de l'autre côté de la bande de matières (1), le capteur de mesure de distance (2) effectuant la mesure par rapport à la plaque métallique (4), et/ou avec un - deuxième - capteur de mesure de distance (5) travaillant sans contact et disposé de l'autre côté de la bande de matière (1), capteur (5) qui de préférence est maintenu en suspension à partir du bas également à une distance de consigne de la bande de matière (1), les capteurs de mesure de distance (2, 5) effectuant les mesures l'un par rapport à l'autre, et avec des dispositifs de positionnement (7 et 9) souples au moins orthogonalement par rapport à la bande de matière (1) destinés aux capteurs de mesure de distance (2) et à la plaque métallique (4) ou au deuxième capteur de distance (5),
caractérisé par le fait qu'au moins l'un des dispositifs de positionnement (7 ou 9) est suspendu par cardan et peut, par l'intermédiaire des moyens d'engagement amovibles (20), être verrouillé dans sa position angulaire, la nature amovible des moyens d'engagement (20) permettant d'éviter un endommagement du capteur (2) ou des capteurs (2 et 5) résultant de défauts de la bande de matière (1) ou d'obstacles situés sur cette bande de matière.

2. Jauge d'épaisseur suivant la revendication 1, caractérisée par le fait que le dispositif de positionnement (9) de la plaque métallique (4) ou du deuxième capteur de mesure de distance (5) est de nature télescopique et présente, aux fins du positionnement souple de la plaque métallique (4) ou du deuxième capteur de mesure de distance (5), au moins un ressort précontraint, dans la direction de la bande de matière (4), par le poids propre de la plaque métallique (4) ou par le poids du deuxième capteur de mesure de distance (5) ou bien présente deux aimants permanents, à pôles de même nature se faisant face l'un à l'autre, disposés entre une extrémité inférieure du dispositif de positionnement (9) et la plaque métallique (4) ou du deuxième capteur de distance (5) ou présente au moins un électro-aimant avec un noyau en fer mobile dans la région de la bobine, relié rigidement à la plaque métallique (4) ou au deuxième capteur de mesure de distance (5) et par le fait que la précontrainte ou bien la position de la plaque métallique (4) ou du deuxième capteur de mesure de distance (5) peut être influencée par une action électrique sur l'électro-aimant, c'est-à-dire par l'action d'une force sur le noyau de l'aimant.

3. Jauge d'épaisseur suivant la revendication 2, caractérisée par le fait que le dispositif de positionnement (9) présente deux électro-aimants disposés entre une extrémité inférieure du dispositif de positionnement (9) et la plaque métallique (4) ou le deuxième capteur de mesure de distance (5), électro-aimants dont les pôles de même nature sont dirigés l'un vers l'autre, et par le fait que la précontrainte ou la position de la plaque métallique (4) ou du deuxième capteur de mesure de distance (5) peut être influencée par une action électrique sur les électro-aimants.

4. Jauge d'épaisseur suivant l'une quelconque des revendications de 1 à 3, caractérisée par le fait que le dispositif de positionnement (7 ou 9) présente une tige (12) portant le capteur de mesure de distance (2) ou le deuxième capteur de mesure de distance (5) ou la plaque métallique (4), tige (12) qui par le truchement d'un élément de guidage (13) traverse une chambre de guidage (14) de préférence cylindrique, par le fait que la tige (12), tant à son entrée dans la chambre de guidage (14) qu'également à sa sortie de la chambre de guidage (14), présente du jeu par rapport à la paroi de cette chambre de guidage, par le fait que l'élément de guidage (13) est, au sein de la chambre de guidage (14), disposé avec du jeu et par le fait que lorsqu'un courant d'air est propulsé à travers la chambre de guidage (14), courant d'air qui est soumis à la même pression que le courant d'air sortant de la tuyère d'échappement d'air (3) en direction de la bande de matière (1), l'élément de guidage (13) et la chambre de guidage (14) constituent un guidage en suspension ou sans frottement pour la tige (12), la tige (12) présentant un conduit d'air intérieur avec un orifice d'échappement d'air dans la région à l'intérieur de la chambre de guidage (14) aux fins de la production du courant d'air à l'intérieur de la chambre de guidage (14), et l'élément de guidage (13) ayant de préférence la forme d'une sphère (23) dont le centre est traversé par la tige (12) la chambre de guidage (14) tandis que l'élément de guidage (13) qui y est disposé avec du jeu est dimensionné de manière telle que la distance qui s'établit entre le capteur de mesure de distance (2 ou 5) ou la plaque métallique (4) et la bande de matière (1) à mesurer est, dans une large mesure, constante indépendamment de la pression d'air et dès lors indépendamment de la force exercée par le courant d'air sur l'élément de guidage (13) faisant fonction de piston et sur la bande de matière (1).

5. Jauge d'épaisseur suivant l'une quelconque des revendications de 1 à 4, dans laquelle des canalisations de raccordement (15) du capteur de mesure de distance (2) sont disposées dans la tige (12), caractérisée par le fait que pour empêcher des rotations de plus de 360°, la tige (12) présente une sécurité contre la rotation (16), par le fait que des aimants (17) tournant avec la tige (12) sont associés à la tige (12) dans la région de sa périphérie et par le fait que des aimants (19) fixes orientés dans le même sens ou dans des sens opposés sont associés au boîtier (18) du dispositif de positionnement (7 ou 9) de telle sorte que la position angulaire de la tige (12) est déterminée par des forces de répulsion ou d'attraction des aimants (17, 19) et par le fait que sur le boîtier (18) du dispositif de positionnement (7 ou 9) est formée une butée pour un élément de butée disposé sur la tige (12).

6. Jauge d'épaisseur suivant l'une quelconque des revendications de 1 à 5, caractérisée par le fait que les moyens d'engagement (20) sont constitués par un élément de centrage de préférence flexible en direction horizontale et verticale (21) et par un élément récepteur (22) associé au dispositif de positionnement (7 ou 9) et pouvant être mis en engagement avec l'élément de centrage (21), par le fait que l'élément de centrage (21) a de préférence la forme d'une broche de centrage avec une sphère (23) orientée vers les dispositifs de positionnement (7 ou 9) tandis que l'élément récepteur (22) a la forme d'une calotte sphérique, par le fait que la broche de centrage peut en tant que piston d'un cylindre d'air (24) être soumise à une pression en direction du dispositif de positionnnement (7 ou 9) et en direction opposée, et par le fait que les moyens d'engagement (20), lorsqu'ils sont en engagement, constituent de préférence un conducteur électrique et par le fait que lorsque le conducteur est interrompu, le dispositif de positionnement (7 ou 9) ou le capteur de mesure de distance (2 ou 5) ou la plaque métallique (4) est éloigné de la matière à mesurer.

7. Jauge d'épaisseur suivant l'une quelconque des revendications de 1 à 6, caractérisée par le fait que la tuyère d'échappement d'air (3) associée au capteur de mesure de distance (2 ou 5) est disposée en forme de cercle autour du capteur de mesure de distance (2) ou par le fait que la tuyère d'échappement d'air (8) associée à la plaque métallique (4) est de forme circulaire et présente sensiblement les mêmes dimensions que la tuyère d'échappement d'air (3) associée au capteur de mesure de distance (2) ou par le fait que plusieurs tuyères d'échappement d'air (8) sont associées à la plaque métallique (4), lesdites tuyères d'air (8) étant distribuées de préférence de manière uniforme au sein de la plaque métallique (4).

8. Jauge d'épaisseur suivant l'une quelconque des revendications de 1 à 7, caractérisée par le fait que la plaque métallique (4) est fabriquée en un matériau ferromagnétique et que le capteur de mesure de distance (2) fonctionne suivant le principe des courants de Foucault par voie inductive ou capacitive.

9. Jauge d'épaisseur suivant l'une quelconque des revendications de 1 à 7, caractérisée par le fait que la plaque métallique (4) est fabriquée en un matériau non ferromagnétique et par le fait que le capteur de mesure de distance (2) fonctionne suivant le principe des courants de Foucault ou par voie capacitive.

10. Jauge d'épaisseur suivant l'une quelconque des revendications de 1 à 9, caractérisée par le fait que le calibrage de la jauge d'épaisseur a lieu par modification des pressions d'air entre les tuyères d'échappement d'air (3, 8) et la bande de matière (1) de telle sorte que par la modification de la distance entre le capteur de mesure de distance (2) ou la plaque métallique (4) ou le deuxième capteur de mesure de distance et la bande de matière (1) ou bien par la modification de la distance entre le capteur de mesure de distance (2) et la plaque métallique (4) ou le deuxième capteur de mesure de distance, la gamme des distances admissibles pour la mesure de l'épaisseur entre le capteur de mesure de distance (2) et la plaque métallique (4) ou le deuxième capteur de mesure est balayée et que, pour une bande de matière (1) d'épaisseur de consigne constante, il est associé une erreur de mesure se référant à l'épaisseur de consigne, et par le fait que le calibrage du dispositif de mesure d'épaisseur a lieu à volonté automatiquement.
